# EUROPÄISCHE PATENTSCHRIFT

(11) **EP 4 445 052 B1**
(45) Veröffentlichungstag und Bekanntmachung des Hinweises auf die Patenterteilung: **01.10.2025**
(21) Anmeldenummer: 22802965.8
(22) Anmeldetag: 17.10.2022
(51) Int. Cl.: F16J 15/34

(54) **GLEITRING EINER GLEITRINGDICHTUNG SOWIE VERFAHREN ZU DESSEN HERSTELLUNG**
SLIDING RING OF A SLIDING RING SEAL, AND METHOD FOR THE PRODUCTION THEREOF
BAGUE DE GLISSEMENT D'UN JOINT À BAGUE DE GLISSEMENT ET SON PROCÉDÉ DE PRODUCTION

(30) Priorität: 07.12.2021 DE 102021132117
(43) Veröffentlichungstag der Anmeldung: 16.10.2024
(73) Patentinhaber: EagleBurgmann Germany GmbH & Co. KG, 82515 Wolfratshausen (DE)
(72) Erfinder: SUSZNIAK, Robert, 82541 Münsing (DE); KREFT, Stefanie, 81369 München (DE)
(74) Vertreter: Hoefer & Partner Patentanwälte mbB
(86) Internationale Anmeldenummer: PCT/EP2022/078800
(87) Internationale Veröffentlichungsnummer: WO 2023/104381

(56) Entgegenhaltungen:
- EP-A1- 0 185 134
- EP-A1- 0 185 134
- EP-A1- 3 770 471
- EP-A1- 3 770 471
- JP-A- H02 176 270
- JP-A- H02 176 270

## Beschreibung

Die vorliegende Erfindung betrifft einen Gleitring einer Gleitringdichtung, eine Gleitringdichtungsanordnung sowie ein Verfahren zur Herstellung des Gleitrings.

Gleitringe von Gleitringdichtungen sind aus dem Stand der Technik in unterschiedlichen Ausgestaltungen bekannt. In jüngster Zeit wird verstärkt zur Überwachung eines Gleitrings, beispielsweise dessen Verschleiß, Sensorik an einer Gleitfläche des Gleitrings angeordnet. Hierbei ergibt sich ein Problemkreis derart, dass die an der Gleitfläche liegende Sensorik elektrisch kontaktiert werden muss. Da die Sensorik an der Gleitfläche liegt, ist es notwendig, dass eine elektrische Durchkontaktierung durch den Gleitring hindurch erfolgt. Da als Material für den Gleitring häufig eine sehr spröde Keramik verwendet wird, sind Bohrungen oder dergleichen, welche in den Gleitring eingebracht werden müssen, um eine elektrische Kontaktierung zu ermöglichen, insbesondere dahingehend gefährlich, dass dadurch die Gefahr von nicht sichtbaren Beschädigungen und Rissen im Gleitring auftreten können. Weiterhin werden Gleitringe an ihren Gleitflächen gerne beschichtet, beispielsweise mit einer Diamantbeschichtung. Hier sind jedoch Bohrungen im Gleitring, welche bis zur Gleitfläche reichen, auch wenn diese mit einem Material aufgefüllt sind, sehr nachteilig, da an den Rändern der Bohrungen häufig Ablösungen der Beschichtung auftreten. Da eine Beschichtung üblicherweise als letzter Schritt bei der Herstellung des Gleitrings hergestellt wird, treten beispielsweise bei einer Diamantbeschichtung auch sehr hohe Prozesstemperaturen von bis zu 900°C auf. Hierdurch ergeben sich für möglicherweise im Gleitring vorhandene niederschmelzende Metalle für eine elektrische Kontaktierung wärmetechnische Probleme, da die Schmelzpunkte derartiger Metalle deutlich unter den Beschichtungstemperaturen liegen.

EP3770471A1 offenbart einen gesinterten, keramischen Gleitring, der aus einem elektrisch leitfähigen keramischen Material hergestellt ist.

Es ist daher Aufgabe der vorliegenden Erfindung, einen Gleitring, eine Gleitringdichtungsanordnung sowie ein Verfahren zur Herstellung eines Gleitrings bereitzustellen, welche bei einfachem Aufbau und einfacher, kostengünstiger Herstellbarkeit und Durchführbarkeit eine sichere elektrische Kontaktierung von Sensorik an einer Gleitfläche des Gleitrings ermöglichen.

Diese Aufgabe wird durch einen Gleitring mit den Merkmalen des Anspruchs 1, eine Gleitringdichtungsanordnung mit den Merkmalen des Anspruchs 12 und ein Verfahren mit den Merkmalen des Anspruchs 13 gelöst. Die Unteransprüche zeigen jeweils bevorzugte Weiterbildungen der Erfindung.

Der erfindungsgemäße Gleitring einer Gleitringdichtungsanordnung mit den Merkmalen des Anspruchs 1 weist demgegenüber den Vorteil auf, dass eine vereinfachte und sichere elektrische Kontaktierung durch einen Gleitring hindurch möglich ist. Hierdurch können insbesondere Sensoren, welche an oder nahe einer Gleitfläche des Gleitrings oder im Gleitring angeordnet sind, elektrisch kontaktiert werden. Es ist aber beispielsweise auch möglich, dass durch den Gleitring ein elektrischer Stromkreis hindurchgeführt wird, welcher beispielsweise für eine Verschleißmessung verwendet werden kann, wenn der elektrische Stromkreis derart angeordnet ist, dass bei einem Verschleiß an der Gleitfläche des Gleitrings der elektrische Stromkreis bei entsprechend weit fortgeschrittenem Verschleiß unterbrochen wird. Dabei kann der Gleitring aus einem elektrisch nicht leitenden, keramischen Material hergestellt werden, was hinsichtlich einer Eignung als Gleitringmaterial vorteilhaft ist. Dies wird erfindungsgemäß dadurch erreicht, dass der Gleitring einen gesinterten, keramischen Ring mit einer Gleitfläche aufweist, wobei der keramische Ring aus einem elektrisch nicht leitfähigen keramischen Material hergestellt ist. Ferner ist ein elektrischer Kontaktkörper vorgesehen, welcher für ein elektrisches Kontaktieren im Ring angeordnet ist. Der elektrische Kontaktkörper ist dabei aus einem gesinterten Keramikmaterial hergestellt, welches elektrisch leitfähig ist. Der elektrische Kontaktkörper ist dabei in einer Ausnehmung im Ring angeordnet und füllt die Ausnehmung zumindest teilweise, vorzugsweise vollständig, aus. Somit kann ein keramischer Gleitring bereitgestellt werden, der durch das Einbringen des elektrischen Kontaktkörpers nur im Bereich des elektrischen Kontaktkörpers elektrisch leitfähig ist. Da sowohl der Ring als auch der Kontaktkörper aus einem Keramikmaterial hergestellt sind, ergeben sich beispielsweise im Vergleich mit einem Gleitring, in welchem ein metallisches Material als elektrische Leitung angeordnet ist, erhebliche Vorteile im Betrieb, da die beim Betrieb der Gleitringdichtungsanordnung entstehende Wärme beim erfindungsgemäßen Gleitring zu einer sehr gleichmäßigen Volumenänderung im Ring und im elektrischen Kontaktkörper führt.

Besonders bevorzugt sind zwischen dem elektrischen Kontaktkörper und dem Ring eine Vielzahl durch Sintern hergestellte chemische Verbindungen ausgebildet. Dies sorgt zum einen für eine sichere Fixierung des Kontaktkörpers im Ring und zum anderen werden dadurch thermisch bedingte Volumenänderungen des Rings und des Kontaktkörpers besonders gleichmäßig ausgeführt. Hierbei sei angemerkt, dass der Kontaktkörper und der Ring gemeinsam in einem Schritt gesintert werden können oder alternativ der Ring vorgesintert wird und anschließend das Material des Kontaktkörpers in die Ausnehmung eingebracht wird und dann in einem zweiten Sinterschritt der vorgesinterte Ring und das Material des Kontaktkörpers nachgesintert werden.

Die Ausnehmung im Ring ist vorzugsweise eine Durchgangsausnehmung. Die Durchgangsausnehmung kann dabei von einer Rückseite zur Gleitfläche verlaufen, insbesondere geradlinig, oder alternativ von einer inneren Umfangsseite oder einer äußeren Umfangsseite zur Gleitfläche verlaufen. Dadurch ist eine elektrische Kontaktierung des Gleitrings an den Umfangsseiten möglich, was bei manchen Bauformen von Gleitringdichtungsanordnungen vorteilhaft ist.

Besonders bevorzugt weist der Kontaktkörper ein Sackloch auf, welches mit einem elektrisch leitfähigen Metallmaterial aufgefüllt ist. Das Sackloch ist dabei an einer Austrittsseite des Kontaktkörpers, beispielsweise an einer Rückseite des Gleitrings, angeordnet. Hierdurch kann eine einfache elektrische Kontaktierung des elektrischen Kontaktbereichs des Gleitrings ermöglicht werden. Beispielsweise kann an das elektrisch leitfähige Metallmaterial eine elektrische Leitung zu einer Messeinrichtung oder einem Rechner oder dergleichen durch Löten oder Schweißen angebracht werden, ohne dass das Keramikmaterial des Gleitrings beschädigt wird. Auch kann dadurch das Einbringen von unerwünschten Spannungen in den Gleitring aufgrund einer elektrischen Kontaktierung des Kontaktbereichs vermieden werden.

Das elektrisch leitfähige Metallmaterial ist vorzugsweise ein Metallpin, welcher in das Sackloch im elektrischen Kontaktkörper mittels einer Pressverbindung eingebracht ist. Dadurch kann der Metallpin einfach und sicher im elektrischen Kontaktkörper fixiert werden.

Besonders bevorzugt bildet der Metallbereich an der Austrittsseite des Kontaktkörpers einen elektrischen Anschluss für den elektrischen Kontaktkörper, an welchem eine elektrische Leitung auf einfache Weise durch Löten oder Schweißen angebracht werden kann.

Weiter bevorzugt umfasst der Gleitring einen am Gleitring angeordneten Sensor, welcher elektrisch mit dem elektrischen Kontaktkörper verbunden ist. Dadurch kann der Sensor auf einfache und sichere Weise elektrisch kontaktiert werden und der Gleitring trotzdem aus einem Keramikmaterial hergestellt sein. Der Sensor ist vorzugsweise an einer Gleitfläche des Gleitrings angeordnet. Hierbei kann eine Ausnehmung in der Gleitfläche des Gleitrings vorgesehen sein, in welcher der Sensor angeordnet ist. Der elektrische Kontaktkörper kann dann bis zur Ausnehmung reichen und den Sensor elektrisch kontaktieren.

Bevorzugt ist der Gleitring dabei ein stationärer Gleitring der Gleitringdichtungsanordnung und umfasst zwei elektrische Kontaktkörper im Ring des Gleitrings, um eine elektrische Kontaktierung des Sensors durch einen geschlossenen Stromkreis zu ermöglichen. Dabei ist der erste der Kontaktkörper eine elektrische Zuleitung und der zweite der Kontaktkörper eine elektrische Rückleitung.

Gemäß einer weiteren bevorzugten Ausgestaltung der Erfindung weist der Gleitring eine Beschichtung auf. Die Beschichtung kann beispielsweise eine Diamantbeschichtung oder eine Titannitridbeschichtung sein. Beschichtete Gleitringe werden bevorzugt eingesetzt, da durch die Beschichtung an der Gleitfläche des Gleitrings eine Lebensdauer des Gleitrings durch reduzierten Verschleiß verlängert werden kann. Ein Problemkreis bei einer Beschichtung einer Gleitfläche eines Gleitrings liegt jedoch darin, dass hierzu üblicherweise sehr hohe Prozesstemperaturen, beispielsweise bei einer Diamantbeschichtung von bis zu 900°C notwendig sind. Metalle, welche in einem Gleitring für eine elektrische Kontaktierung vorgesehen sind, schmelzen jedoch bei derart hohen Temperaturen von ca. 900°C. Dadurch war es jedoch bisher nicht möglich, beschichtete Gleitringe mit einem Sensor, insbesondere einem Verschleißsensor zu versehen, da eine elektrische Kontaktierung des Sensors durch die üblichen Kontaktierungsverfahren nicht möglich ist. Ein nachträgliches Einbringen einer elektrischen Kontaktierung, beispielsweise das Vorsehen einer Bohrung in den keramischen Ring nach Aufbringen der Beschichtung ist jedoch sehr schwierig und kostenintensiv und es besteht immer die Gefahr, dass der keramische Gleitring Risse oder die Beschichtung Beschädigungen erfährt, wodurch ein Ausschussanteil bei der Herstellung derartiger beschichteter keramischer Gleitringe mit elektrischen Leitungen sehr hoch und in der Regel unwirtschaftlich ist.

Der keramische Ring des Gleitrings ist vorzugsweise aus SiC hergestellt, was ein elektrisch nicht leitendes Material ist, d.h. eine elektrische Leitfähigkeit von ≤ 10⁻⁸S/m bei 20°C aufweist. Als Material für den elektrischen Kontaktkörper wird bevorzugt Si-SiC, d.h. Silicium-infiltriertes SiC, oder dotiertes SiC, welches elektrische Leitfähigkeit aufweist, oder SiC-C-Si, d.h. mit Kohlenstoff und Silicium infiltriertes SiC, verwendet.

Ferner betrifft die vorliegende Erfindung eine Gleitringdichtungsanordnung mit einem erfindungsgemäßen Gleitring. Vorzugsweise wird der erfindungsgemäße Gleitring als stationärer Gleitring der Gleitringdichtungsanordnung verwendet. Die Gleitringdichtungsanordnung umfasst besonders bevorzugt einen Sensor am stationären Gleitring, welcher durch den elektrischen Kontaktkörper mit einer Messeinrichtung elektrisch verbunden ist. Der Sensor ist insbesondere ein Verschleißsensor.

Ferner betrifft die vorliegende Erfindung ein Verfahren zur Herstellung eines Gleitrings, insbesondere eines stationären Gleitrings, einer Gleitringdichtungsanordnung. Das Verfahren umfasst dabei die Schritte:
- Herstellen eines ringförmigen Grünlings aus einem elektrisch nicht leitfähigen keramischen Material,
- Einbringen einer Ausnehmung in den Grünling,
- Füllen der Ausnehmung im Grünling mit einem elektrisch leitfähig, keramischen Material, und
- Sintern des Grünlings mit der befüllten Ausnehmung.

Durch das erfindungsgemäße Verfahren kann somit ein keramischer Gleitring einer Gleitringdichtungsanordnung hergestellt werden, welcher elektrisch nicht leitfähig ist, jedoch einen elektrisch leitfähigen Kontaktkörper durch das gesinterte, also hier in der Ausnehmung befindliche elektrisch leitfähige keramische Material aufweist. Dabei werden die voranstehend für den Gleitring beschriebenen Vorteile erhalten.

Vorzugsweise wird bei dem erfindungsgemäßen Verfahren nach dem Einbringen der Ausnehmung in den Grünling der Grünling vorgesintert. Anschließend wird dann das elektrisch leitfähige keramische Material in die Ausnehmung eingebracht und dann ein zweites Sintern (Nachsintern) ausgeführt, um den keramischen Gleitring mit keramischem, elektrischem Kontaktkörper zu erhalten. Somit kann der Gleitring durch ein Sintern in zwei Schritten erhalten werden.

Vorzugsweise wird nach dem Sintern des Gleitrings eine Beschichtung, insbesondere eine Diamantbeschichtung, auf einer Gleitfläche des Gleitrings aufgebracht. Weiter bevorzugt wird nach dem Sintern ein Sackloch in den elektrischen Kontaktkörper im Gleitring eingebracht, welches mit einem elektrisch leitfähigen Metallmaterial, vorzugsweise in Form eines in die Aussparung eingepressten Metallpins, aufgefüllt.

Nachfolgend werden bevorzugte Ausführungsbeispiele der Erfindung unter Bezugnahme auf die begleitende Zeichnung im Detail beschreiben. In der Zeichnung ist:
- Fig. 1: eine schematische Schnittansicht einer Gleitringdichtungsanordnung mit einem erfindungsgemäßen Gleitring gemäß einem ersten Ausführungsbeispiel der Erfindung,
- Fig. 2: eine schematische Schnittansicht des erfindungsgemäßen Gleitrings von Fig. 1,
- Fig. 3: eine schematische Schnittansicht eines Gleitrings gemäß einem zweiten Ausführungsbeispiel der Erfindung, und
- Fig. 4: eine schematische Schnittansicht eines Gleitrings gemäß einem dritten Ausführungsbeispiel der Erfindung.

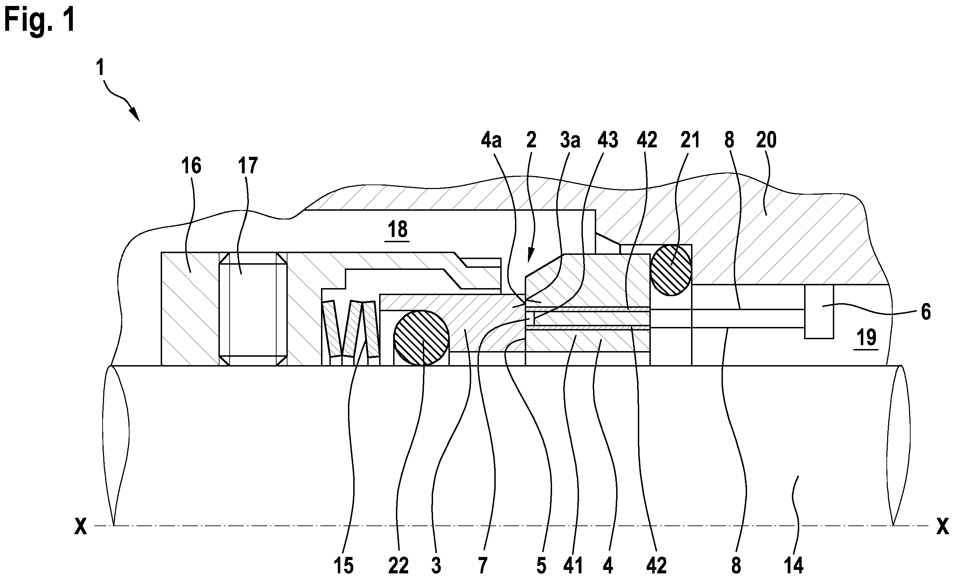

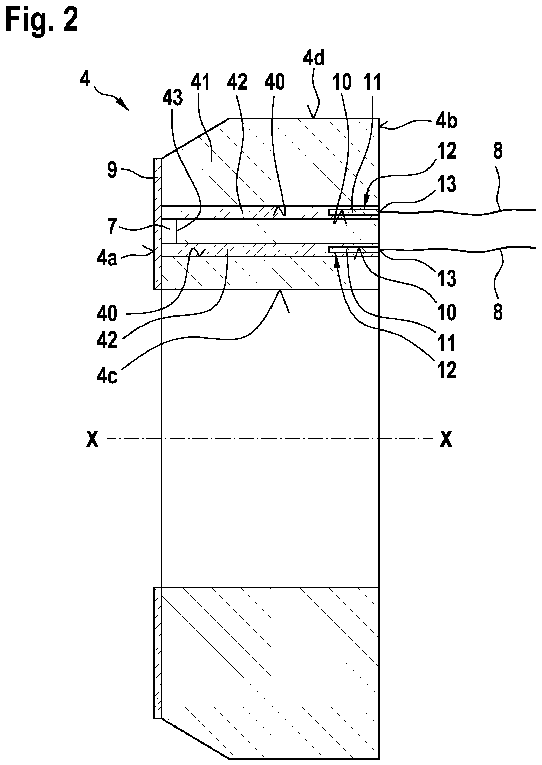

Nachfolgend wird unter Bezugnahme auf die Figuren 1 und 2 eine Gleitringdichtungsanordnung 1 gemäß einem ersten bevorzugten Ausführungsbeispiel der Erfindung im Detail beschrieben.

Wie aus Fig. 1 ersichtlich ist, umfasst die Gleitringdichtungsanordnung 1 eine Gleitringdichtung 2 mit einem rotierenden Gleitring 3 und einem stationären Gleitring 4. Der rotierende Gleitring 3 weist eine erste Gleitfläche 3a auf und der stationäre Gleitring 4 weist eine zweite Gleitfläche 4a auf.

Zwischen den beiden Gleitflächen 3a, 4a der Gleitringe 3, 4 ist ein Dichtspalt 5 definiert. Die Gleitringdichtungsanordnung 1 dichtet dabei einen Bereich 18, in welchem ein abzudichtendes Produkt vorhanden ist, gegenüber einem Atmosphärenbereich 19 an einer Welle 14 ab. Der rotierende Gleitring 3 ist dabei mittels eines Gleitringträgers 16 und einer Schraube 17 mit der Welle 14 drehfest verbunden.

Ferner ist ein Vorspannelement 15 vorgesehen, welches den rotierenden Gleitring 3 in einer Axialrichtung einer Mittelachse X-X gegen den stationären Gleitring 4 vorspannt.

Der stationäre Gleitring 4 ist mittels eines ersten O-Rings 21 gegenüber einem stationären Gehäusebauteil 20 abgedichtet. Der rotierende Gleitring 3 ist mittels eines zweiten O-Rings 22 an seinem Innenumfang an der Welle 14 abgedichtet.

Die Gleitringdichtungsanordnung 1 umfasst ferner eine Messeinrichtung 6, welche insbesondere für eine Messung eines Verschleißes des stationären Gleitrings 4 an dessen Gleitfläche 4a eingerichtet ist. Die Messeinrichtung 6 ist dabei mit einem Sensor 7 verbunden. Der Sensor 7 ist an der Gleitfläche 4a des stationären Gleitrings 4 angeordnet.

Der Sensor 7 ist einer Vertiefung 43 in der Gleitfläche angeordnet und bevorzugt ein Verschleißsensor.

Hierzu muss eine elektrische Kontaktierung des Sensors 7 an der Gleitfläche 4a vorgesehen werden sein, welche im Detail aus Fig. 2 ersichtlich ist. Wie aus Fig. 2 ersichtlich ist, weist der stationäre Gleitring 4 einen gesinterten, keramischen Ring 41 auf, welcher aus einem elektrisch nicht leitfähigen keramischen Material, insbesondere SiC, hergestellt ist. Ferner sind im Ring 41 zwei gleich aufgebaute elektrische Kontaktkörper 42 angeordnet, welche aus einem gesinterten Keramikmaterial hergestellt sind, die eine elektrische Leitfähigkeit aufweisen, insbesondere aus Silicium-infiltriertem SiC (Si-SiC).

Wie aus Fig. 2 ersichtlich ist, verlaufen die Kontaktbereiche 42 von einer Rückseite 4b zur Gleitfläche 4a. An der Gleitfläche 4a ist eine Beschichtung 9 vorgesehen. Die elektrischen Kontaktkörper 42 sind in Ausnehmungen 40, welche im Ring 41 ausgebildet sind, angeordnet und verlaufen geradlinig durch den Gleitring 4.

Die elektrischen Kontaktkörper 42 weisen an einer Austrittsseite an der Rückseite 4b des Gleitrings 4 jeweils einen elektrischen Anschluss 13 für eine elektrische Leitung 8 auf. Dabei ist der elektrische Anschluss 13 derart gebildet, dass in dem elektrischem Kontaktkörper 42 ein Sackloch 10 vorgesehen ist, welches zur Rückseite 4b des stationären Gleitrings 4 offen ist und welches mit einem Metallmaterial in Form eines Metallpins 11 aufgefüllt ist. Zwischen dem Metallpin 11 und der Aussparung 10 ist dabei eine Pressverbindung 12 ausgebildet.

Mit anderen Worten weist der elektrische Kontaktkörper 42 an der zur Rückseite des Gleitrings 4 gerichteten Seite ein mit dem Metallpin 11 aufgefülltes Sackloch 10 auf, sodass eine elektrische Kontaktierung des elektrischen Kontaktkörpers 42 über den Metallpin 11 erfolgen kann. Wie in Figur 1 gezeigt, sind die beiden elektrischen Kontaktkörper 42 durch die elektrischen Leitungen 8 mit der Messeinrichtung 6 elektrisch verbunden und somit auch der Sensor 7 mit der Messeinrichtung 6 elektrisch verbunden.

Der stationäre Gleitring 4 aus keramischen Material kann dabei derart hergestellt werden, dass in einem ersten Schritt ein ringförmiger Grünling entsprechend der gewünschten geometrischen Gestalt des stationären Gleitrings 4 aus einem elektrisch nicht leitfähigen keramischen Material, z.B. SiC, bereitgestellt wird. Anschließend werden die Ausnehmungen 40 für die elektrischen Kontaktkörper 42 in den Grünling eingebracht. In einem nächsten Schritt erfolgt ein Auffüllen der Ausnehmungen mit einem elektrisch leitfähigen, keramischen Material, beispielsweise Si-SiC, die beim fertiggestellten Gleitring dann die elektrischen Kontaktkörper 42 bilden. In einem nächsten Schritt erfolgt ein Sintern des Grünlings. Dabei ergeben sich insbesondere durch das Sintern hergestellte chemische Verbindungen zwischen dem Material des Rings und dem Material der Kontaktkörper. Dadurch wird der elektrisch leitfähige Bereich in Form der elektrischen Kontaktkörper 42 in den Gleitring integriert.

Wenn ein Sensor 7, beispielsweise an der Gleitfläche des Gleitrings vorgesehen sein soll, wird vorzugsweise eine entsprechend ausgebildete Vertiefung oder dergleichen in der Gleitfläche vorgenommen, in welcher später der Sensor 7 aufgenommen wird. Die elektrischen Kontaktbereiche 42 führen dabei dann sinnvollerweise bis zu der Vertiefung, um später den Sensor elektrisch kontaktieren zu können.

Da eine Wärmeausdehnung der Keramiken des Rings 41 und des elektrischen Kontaktkörpers 42 im Wesentlichen gleich ist, erfolgt insbesondere keine Bauteilschwächung bei einer Wärmeausdehnung, wie dies bei Verwendung eines metallischen Materials für eine elektrische Kontaktierung vorhanden wäre. Dadurch ergeben sich ferner auch keine temperaturabhängigen Einschränkungen bei einer Wahl der Beschichtung 9. Insbesondere kann eine Diamantbeschichtung, die bei Temperaturen von circa 900 °C aufgebracht werden muss, vorgesehen sein.

Weiterhin ergeben sich durch die atomaren Bindungen beim Schritt des Sinterns zwischen dem Material des Rings 41 und dem Material der elektrischen Kontaktkörper 42 insbesondere an der Gleitfläche bündige Abschlüsse, sodass der Gleitring eine hervorragende Ebenheit aufweist und insbesondere auch ein kantenloser Übergang zwischen dem Ringmaterial und dem Material des elektrischen Kontaktbereichs vorhanden ist.

Die atomare Bindung zwischen dem elektrisch nicht leitfähigen keramischen Material des Rings 41 und dem elektrisch leitfähigen, keramischen Material des Kontaktkörpers 42 ergeben insbesondere auch deutlich verbesserte Notlaufeigenschaften, insbesondere hinsichtlich einer möglichen Notlaufdauer, da an der Gleitfläche 4a beispielsweise nach Verschleiß einer Beschichtung 9 trotzdem eine ebene, insbesondere am Übergang zwischen den beiden Materialien kantenfreie Fläche vorhanden ist, die als Gleitfläche für den Notlauf verwendet werden kann.

Somit kann ein stationärer Gleitring 4 bereitgestellt werden, welcher beispielsweise einen Verschleißsensor 7 an der Gleitfläche und eine Beschichtung 9 in Form einer Diamantbeschichtung aufweist. Die Sensorkontaktierung ist dabei in den Ring integriert und durch ein gleitfähiges, keramisches Material sichergestellt. Mittels des Metallpins 11 im elektrisch leitfähigen Material kann auch eine besonders einfache thermische elektrische Kontaktierung durch Schweißen oder Löten direkt am Gleitring erfolgen, ohne dass Beschädigungen des Gleitrings auftreten.

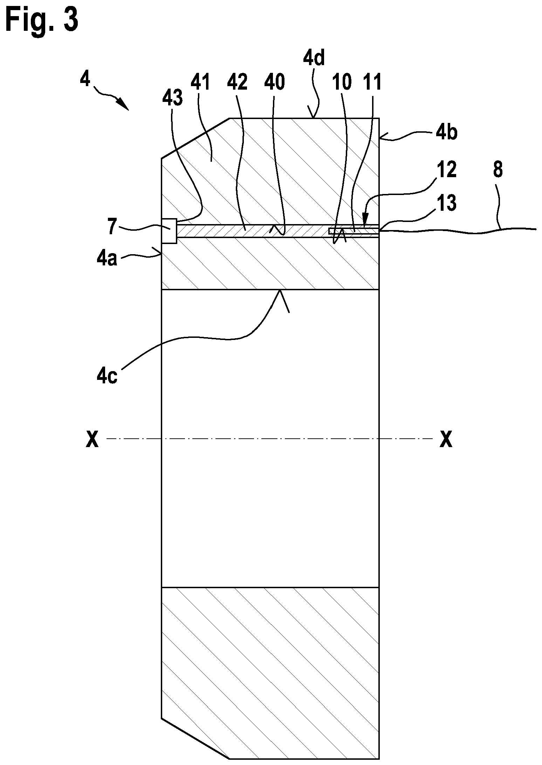

Figur 3 zeigt einen Gleitring 4 einer Gleitringdichtungsanordnung gemäß einem zweiten Ausführungsbeispiel der Erfindung. Gleiche beziehungsweise funktional gleiche Teile sind mit den gleichen Bezugszeichen wie im ersten Ausführungsbeispiel bezeichnet.

Im Unterschied zum ersten Ausführungsbeispiel weist der Gleitring des zweiten Ausführungsbeispiels keine Beschichtung auf. Ein Sensor 7 ist direkt an der Gleitfläche 4a des stationären Gleitrings 4 angeordnet. Die elektrische Kontaktierung des Sensors 7 erfolgt an einer Rückseite des Sensors durch einen elektrischen Kontaktkörper 42. Dieser ist gleich wie im ersten Ausführungsbeispiel ausgeführt und aus einem elektrisch leitfähigen keramischen Material hergestellt. An der Rückseite 4b, d.h. der Austrittseite des elektrischen Kontaktkörpers 42 ist für eine einfache elektrische Kontaktierung ein Metallpin 11 angebracht. Ansonsten entspricht das Ausführungsbeispiel dem vorhergehen Ausführungsbeispiel, sodass auf die dort gegebene Beschreibung verwiesen werden kann.

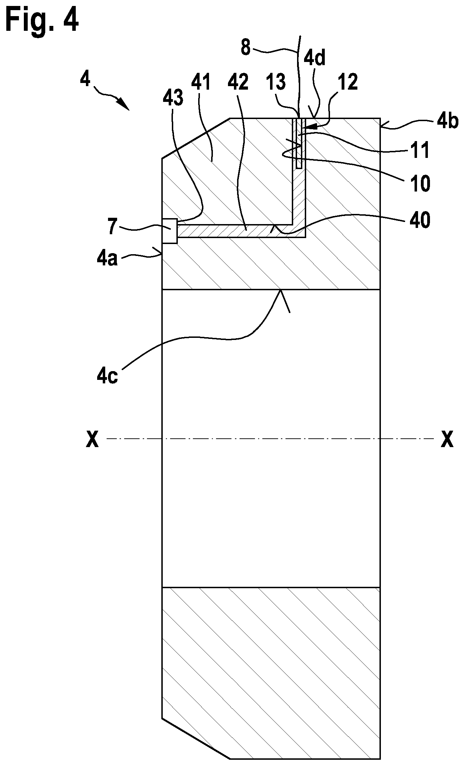

Figur 4 zeigt einen Gleitring 4 gemäß einem dritten Ausführungsbeispiel der Erfindung. Gleiche beziehungsweise funktionsgleiche Teile sind mit den Gleitbezugszeichen wie in den vorherigen Ausführungsbeispielen bezeichnet.

Wie aus Figur 4 unmittelbar ersichtlich wird, ist die elektrische Kontaktierung beim dritten Ausführungsbeispiel statt an der Rückseite 4b an einer äußeren Umfangsseite 4d vorgesehen. Die Ausnehmung 40 bildet somit einen 90°-Winkel im Ring 41. Dies kann beispielsweise durch Einbringen von zwei Bohrungen in den keramischen Ring 41 vorgesehen sein. Es sei angemerkt, dass auf gleiche Weise auch eine elektrische Kontaktierung an einer inneren Umfangsseite 4c möglich wäre. Bei Vorsehen von zwei elektrischen Kontaktierungen wäre es auch denkbar, dass eine elektrische Kontaktierung an der äußeren Umfangsseite 4d und eine elektrische Kontaktierung an der inneren Umfangsseite 4c ausgebildet ist. Ferner wäre selbstverständlich auch eine Kombination mit einer Kontaktierung an der Rückseite 4b des stationären Gleitrings 4 und einer der Umfangsseiten 4c, 4d denkbar. Ansonsten entspricht dieses Ausführungsbeispiel den vorhergehenden Ausführungsbeispielen, sodass auch die gegebene Beschreibung verwiesen werden kann.

Neben der vorstehenden schriftlichen Beschreibung der Erfindung wird zu deren ergänzender Offenbarung hiermit explizit auf die zeichnerische Darstellung der Erfindung in den Fig. 1 bis 4 Bezug genommen.

### Bezugszeichenliste

- 1: Gleitringdichtungsanordnung
- 2: Gleitringdichtung
- 3: rotierender Gleitring
- 3a: erste Gleitfläche
- 4: stationärer Gleitring
- 4a: zweite Gleitfläche
- 4b: Rückseite
- 4c: innere Umfangsseite
- 4d: äußere Umfangsseite
- 5: Dichtspalt
- 6: Messeinrichtung
- 7: Sensor
- 8: elektrische Leitung
- 9: Beschichtung
- 10: Sackloch im Kontaktkörper
- 11: Metallpin
- 12: Pressverbindung
- 13: elektrischer Anschluss
- 14: Welle
- 15: Vorspannelement
- 16: Gleitringträger
- 17: Schraube
- 18: Bereich, in dem abzudichtende Produkt vorhanden ist
- 19: Atmosphärenbereich
- 20: Gehäusebauteil
- 21: erster O-Ring
- 22: zweiter O-Ring
- 40: Ausnehmung
- 41: elektrisch nicht leitfähiger keramischer Ring
- 42: elektrisch leitfähiger Kontaktkörper
- 43: Vertiefung in der Gleitfläche
- X-X: Mittelachse

## Patentansprüche

1. Gleitring einer Gleitringdichtungsanordnung, umfassend
- einen gesinterten, keramischen Ring (41) mit einer Gleitfläche (4a), welcher aus einem elektrisch nicht leitfähigen keramischen Material hergestellt ist, und
- einen elektrischen Kontaktkörper (42), der für eine elektrische Kontaktierung eingerichtet ist und im Ring (41) angeordnet ist,
- wobei der elektrische Kontaktkörper (42) aus einen gesinterten Keramikmaterial hergestellt ist, welches elektrisch leitfähig ist, und
- wobei der elektrische Kontaktkörper (42) in einer Ausnehmung (40) im Ring (41) angeordnet ist und die Ausnehmung (40) auffüllt.

2. Gleitringdichtung nach Anspruch 1, wobei zwischen dem elektrischen Kontaktkörper (42) und dem Ring (41) durch Sintern hergestellte chemische Verbindungen ausgebildet sind.

3. Gleitring nach einem der vorherigen Ansprüche, wobei die Ausnehmung (40) eine Durchgangsausnehmung ist, welche von einer Rückseite (4b) zur Gleitfläche (4a) reicht oder welche von einer inneren Umfangsseite (4c) oder einer äußeren Umfangsseite (4d) zur Gleitfläche (4a) reicht.

4. Gleitring nach einem der vorherigen Ansprüche, wobei der Kontaktkörper (42) ein Sackloch (10) an einer von der Gleitfläche abgewandten Austrittsseite des Kontaktkörpers aufweist, welche mit einem elektrisch leitfähigen Metallmaterial aufgefüllt ist.

5. Gleitring nach Anspruch 4, wobei das elektrisch leitfähige Metallmaterial ein Metallpin (11) ist, wobei zwischen dem Metallpin (11) und dem Sackloch (10) eine Pressverbindung (12) ausgebildet ist.

6. Gleitring nach einem der Ansprüche 4 oder 5, wobei eine elektrische Leitung (8) mit dem elektrischen Kontaktkörper (42) an einem durch einen freiliegenden Bereich des elektrischen Metallmaterials gebildeten Anschluss (13) elektrisch verbunden ist.

7. Gleitring nach einem der vorherigen Ansprüchen, ferner umfassend einen am Gleitring angeordneten Sensor (7), welcher elektrisch mit dem elektrischen Kontaktkörper (42) verbunden ist.

8. Gleitring nach Anspruch 7, wobei der Sensor an der Gleitfläche des Gleitrings angeordnet ist.

9. Gleitring nach Anspruch 7 oder 8, wobei der Gleitring ein stationärer Gleitring der Gleitringdichtungsanordnung ist und zwei Kontaktkörper (42) im Ring (41) zur elektrischen Kontaktierung des Sensors (7) vorhanden sind.

10. Gleitring nach einem der vorherigen Ansprüche, wobei die Gleitfläche (4a) des Rings (41) mit einer Beschichtung (9) beschichtet ist.

11. Gleitring nach einem der vorherigen Ansprüche, wobei der Ring (41) aus SiC hergestellt ist und der elektrische Kontaktkörper (42) aus Si-SiC oder dotiertem SiC oder SiC-C-Si hergestellt ist.

12. Gleitringdichtungsanordnung umfassend einen stationären Gleitring (4) entsprechend einem der vorhergehenden Ansprüche sowie eine Messeinrichtung (6), die elektrisch mit dem Kontaktkörper (42) des Gleitrings (4) verbunden ist.

13. Verfahren zur Herstellung eines Gleitrings, umfassend die Schritte:
- Herstellen eines ringförmigen Grünlings aus einem elektrisch nicht leitfähigen keramischen Material,
- Einbringen einer Ausnehmung (40) in den Grünling,
- Füllen der Ausnehmung (40) mit einem elektrisch leitfähigen, keramischen Material, und
- Sintern des Grünlings und des eingebrachten keramischen Materials, sodass ein keramischer Gleitring mit einem elektrisch nicht leitfähigen keramischen Ring (41) und einem elektrisch leitfähigen, keramischen Kontaktkörper (42) hergestellt wird.

14. Verfahren nach Anspruch 13, wobei nach dem Einbringen der Ausnehmung in den Grünling der Grünling vorgesintert wird und das elektrisch leitfähige keramische Material nach dem Vorsintern in die Ausnehmung (40) eingebracht wird und anschließend ein Nachsintern des vorgesinterten Grünlings und des in die Ausnehmung eingebrachten keramischen Material ausgeführt wird.

15. Verfahren nach Anspruch 13 oder 14, wobei auf die Gleitfläche (4a) des Gleitrings nach dem Sintern eine Beschichtung (9) aufgebracht wird.

16. Verfahren nach einem der Ansprüche 13 bis 15, wobei nach dem Sintern ein Sackloch in den aus dem elektrisch leitfähigen keramischen Material hergestellten Kontaktkörper (42) eingebracht wird und das Sackloch mit einem elektrisch leitfähigen Metall aufgefüllt wird, um eine elektrische Kontaktierungsmöglichkeit am eingebrachten Metall bereitzustellen.

## Claims

1. Slide ring of a mechanical seal assembly, comprising
- a sintered, ceramic ring (41) having a slide surface (4a), which ring is made of an electrically non-conductive ceramic material, and
- an electrical contact body (42), which is configured for electrical contacting and is arranged in the ring (41),
- wherein the electrical contact body (42) is made of a sintered ceramic material which is electrically conductive, and
- wherein the electrical contact body (42) is arranged in a recess (40) in the ring (41) and fills the recess (40).

2. Mechanical seal according to claim 1, wherein chemical bonds produced by sintering are formed between the electrical contact body (42) and the ring (41).

3. Slide ring according to any of the preceding claims, wherein the recess (40) is a through-recess which extends from a rear surface (4b) to the slide surface (4a) or extend from an inner circumferential surface (4c) or an outer circumferential surface (4d) to the slide surface (4a).

4. Slide ring according to any of the preceding claims, wherein the contact body (42) comprises a blind hole (10) on an exit side of the contact body which is facing away from the slide surface and is filled with an electrically conductive metal material.

5. Slide ring according to claim 4, wherein the electrically conductive metal material is a metal pin (11), wherein a press fit (12) is formed between the metal pin (11) and the blind hole (10).

6. Slide ring according to any of claims 4 or 5, wherein an electrical line (8) is electrically connected to the electrical contact body (42) at a terminal (13) formed by an exposed region of the electrical metal material.

7. Slide ring according to any of the preceding claims, further comprising a sensor (7) which is arranged on the slide ring and is electrically connected to the electrical contact body (42).

8. Slide ring according to claim 7, wherein the sensor is arranged on the slide surface of the slide ring.

9. Slide ring according to claim 7 or 8, wherein the slide ring is a stationary slide ring of the mechanical seal assembly and two contact bodies (42) are provided in the ring (41) for electrically contacting the sensor (7).

10. Slide ring according to any of the preceding claims, wherein the slide surface (4a) of the ring (41) is coated with a coating (9).

11. Slide ring according to any of the preceding claims, wherein the ring (41) is made of SiC and the electrical contact body (42) is made of Si-SiC or doped SiC or SiC-C-Si.

12. Mechanical seal assembly, comprising a stationary slide ring (4) in accordance with any one of the preceding claims and a measuring apparatus (6), which is electrically connected to the contact body (42) of the slide ring (4).

13. Method for producing a slide ring, comprising the steps of:
- producing an annular green body from an electrically non-conductive ceramic material,
- making a recess (40) in the green body,
- filling the recess (40) with an electrically conductive, ceramic material, and
- sintering the green body and the introduced ceramic material such that a ceramic slide ring comprising an electrically non-conductive ceramic ring (41) and an electrically conductive, ceramic contact body (42) is produced.

14. Method according to claim 13, wherein after making the recess in the green body, the green body is pre-sintered and the electrically conductive ceramic material is introduced into the recess (40) after the pre-sintering, and subsequently the pre-sintered green body and the ceramic material introduced into the recess are re-sintered.

15. Method according to claim 13 or 14, wherein a coating (9) is applied to the slide surface (4a) of the slide ring after the sintering.

16. Method according to any of claims 13 to 15, wherein after the sintering, a blind hole is made in the contact body (42) made of the electrically conductive ceramic material and the blind hole is filled with an electrically conductive metal in order to provide the option of electrical contacting at the introduced metal.

## Revendications

1. Bague de glissement d'un agencement d'étanchéité à bague de glissement comprenant
- une bague céramique frittée (41) avec une surface de glissement (4a) qui est réalisée en un matériau céramique non conducteur électriquement, et
- un corps de contact électrique (42) qui est configuré pour une mise en contact électrique et est disposé dans la bague (41),
- dans lequel le corps de contact électrique (42) est en un matériau céramique fritté qui est conducteur électriquement, et
- dans lequel le corps de contact électrique (42) est disposé dans un évidement (40) dans la bague (41) et remplit l'évidement (40).

2. Joint à bague de glissement selon la revendication 1, dans lequel des liaisons chimiques réalisées par frittage sont formées entre le corps de contact électrique (42) et la bague (41).

3. Bague de glissement selon l'une quelconque des revendications précédentes, dans laquelle l'évidement (40) est un évidement de passage qui s'étend d'une face arrière (4b) à la surface de glissement (4a) ou qui s'étend d'un côté circonférentiel intérieur (4c) ou d'un côté circonférentiel extérieur (4d) à la surface de glissement (4a).

4. Bague de glissement selon l'une quelconque des revendications précédentes, dans laquelle le corps de contact (42) présente un trou borgne (10) sur un côté de sortie du corps de contact éloigné de la surface de glissement, lequel est rempli d'un matériau métallique conducteur électriquement.

5. Bague de glissement selon la revendication 4, dans laquelle le matériau métallique conducteur électriquement est une broche métallique (11), dans laquelle une liaison sertie (12) est formée entre la broche métallique (11) et le trou borgne (10).

6. Bague de glissement selon l'une quelconque des revendications 4 ou 5, dans laquelle une ligne électrique (8) est reliée électriquement au corps de contact électrique (42) sur un raccord (13) formé par une zone exposée du matériau métallique électrique.

7. Bague de glissement selon l'une quelconque des revendications précédentes, comprenant en outre un capteur (7) disposé sur la bague de glissement, lequel est relié électriquement au corps de contact électrique (42).

8. Bague de glissement selon la revendication 7, dans laquelle le capteur est agencé sur la surface de glissement de la bague de glissement.

9. Bague de glissement selon la revendication 7 ou 8, dans laquelle la bague de glissement est une bague de glissement fixe de l'agencement d'étanchéité à bague de glissement et deux corps de contact (42) sont présents dans la bague (41) pour la mise en contact électrique du capteur (7).

10. Bague de glissement selon l'une quelconque des revendications précédentes, dans laquelle la surface de glissement (4a) de la bague (41) est revêtue d'un revêtement (9).

11. Bague de glissement selon l'une quelconque des revendications précédentes, dans laquelle la bague (41) est fabriquée en SiC et le corps de contact électrique (42) est fabriqué en Si-SiC ou SiC dopé ou SiC-C-Si.

12. Agencement d'étanchéité à bague de glissement comprenant une bague de glissement fixe (4) selon l'une quelconque des revendications précédentes ainsi qu'un dispositif de mesure (6) qui est relié électriquement au corps de contact (42) de la bague de glissement (4).

13. Procédé de production d'une bague de glissement, comprenant les étapes suivantes :
- la fabrication d'un corps vert annulaire en un matériau céramique non conducteur électriquement,
- la réalisation d'un évidement (40) dans le corps vert,
- le remplissage de l'évidement (40) avec un matériau céramique conducteur électriquement, et
- le frittage du corps vert et du matériau céramique introduit de manière à réaliser une bague de glissement céramique avec une bague céramique (41) non conductrice électriquement et un corps de contact céramique (42) conducteur électriquement.

14. Procédé selon la revendication 13, dans lequel, après l'introduction de l'évidement dans le corps vert, le corps vert est préfritté et le matériau céramique électriquement conducteur est introduit dans l'évidement (40) après le préfrittage, puis un postfrittage du corps vert préfritté et du matériau céramique introduit dans l'évidement est effectué.

15. Procédé selon la revendication 13 ou 14, dans lequel un revêtement (9) est appliqué sur la surface de glissement (4a) de la bague de glissement après le frittage.

16. Procédé selon l'une quelconque des revendications 13 à 15, dans lequel, après le frittage, un trou borgne est inséré dans le corps de contact (42) fabriqué à partir du matériau céramique électriquement conducteur et le trou borgne est rempli d'un métal conducteur électriquement pour fournir une possibilité de contact électrique sur le métal introduit.
